# EUROPÄISCHE PATENTSCHRIFT

(11) **EP 0 692 678 B1**
(45) Veröffentlichungstag und Bekanntmachung des Hinweises auf die Patenterteilung: **05.08.1998**
(21) Anmeldenummer: 95109520.7
(22) Anmeldetag: 20.06.1995
(51) Int. Cl.: F23G 5/12

(54) **Verfahren zum Verbrennen von Abfallstoffen im Schlackebadreaktor**
Method of burning of waste materials in the slag fusion reactor
Méthode d'incinération d'ordures ménagères au poche de laitier

(30) Priorität: 13.07.1994 DE 4424707
(43) Veröffentlichungstag der Anmeldung: 17.01.1996
(73) Patentinhaber: METALLGESELLSCHAFT AG, 60323 Frankfurt am Main (DE)
(72) Erfinder: Albrecht, Johannes, Dr., D-61206 Wöllstadt (DE); Hirsch, Martin, Dr., D-61381 Friedrichsdorf (DE); Löffler, Johannes, Dr., D-61348 Bad Homburg (DE); Ströder, Michael, Dr., D-61267 Neu Anspach (DE)

(56) Entgegenhaltungen:
- AT-B- 368 267
- DE-A- 2 163 484
- DE-A- 3 207 203
- DE-C- 737 518
- DE-C- 4 130 416

## Beschreibung

Die Erfindung betrifft ein Verfahren zur thermischen Entsorgung von Abfallstoffen in einem Reaktor mit einem Schlackebad, das Temperaturen im Bereich von 1200 bis 1600°C aufweist und das mindestens teilweise aus der bei der Oxidation der Abfallstoffe gebildeten Schlacke besteht.

Ein solches Verfahren ist aus EP-A-0 405 124 und DE-A-3 207 203 bekannt. Der Erfindung liegt die Aufgabe zugrunde, beim eingangs genannten Verfahren auch mit niedrigem Heizwert der Abfallstoffe auszukommen und eine intensive Umsetzung der Abfallstoffe zu erreichen. Erfindungsgemäß gelingt dies dadurch, daß man zum Aufrechterhalten der Temperatur im Bereich des Schlackebades ein erstes sauerstoffhaltiges Gas durch im Schlackebad mündende Düsen (Unterbaddüsen) und ein zweites sauerstoffhaltiges Gas von oben durch auf die Schlacke gerichtete Düsen (Überbaddüsen) einleitet, wobei man 10 bis 50 % des gesamten O₂-Gehalts des ersten und zweiten sauerstoffhaltigen Gases durch die Unterbaddüsen in das Schlackebad leitet und Schlackeschaum erzeugt, daß man die gesamte durch die Unterbaddüsen und die Überbaddüsen eingeleitete Sauerstoffmenge so bemißt, daß sie 60 bis 90 % der zur vollständigen Oxidation der dem Reaktor zugeführten brennbaren Bestandteile nötigen Sauerstoffmenge entspricht, und daß man unter Zugabe eines dritten sauerstoffhaltigen Gases die aus dem Bereich des Schlackebades aufsteigenden Gase und Dämpfe oberhalb der Überbaddüsen im Reaktor nachverbrennt. Hierbei beträgt die insgesamt durch das erste, zweite und dritte sauerstoffhaltige Gas in den Reaktor eingeleitete O₂-Menge 100 bis 130 % des stöchiometrisch nötigen Sauerstoffs, um die dem Reaktor zugeführten brennbaren Bestandteile vollständig zu oxidieren.

Beim Verfahren der Erfindung wandelt das durch die Unterbaddüsen in die Schlacke eingeleitete sauerstoffhaltige Gas das Schlackebad mehr oder weniger in Schaumschlacke um, welcher die Abfallstoffe zugeführt werden. Die Schaumschlacke mit ihrer hohen Temperatur hüllt die angelieferten Abfallstoffe weitgehend ein, so daß sich die Abfallstoffe sehr schnell aufheizen. Dies führt zur intensiven Entgasung der Abfallstoffe, wobei die Überbaddüsen für eine beschleunigte partielle Verbrennung sorgen. Ohne die Schlackeschaumschicht würden sich die Abfallstoffe nur relativ langsam aufheizen, da die Abfälle auf der Schlacke schwimmen und kaum eintauchen. Es ist ersichtlich, daß durch die intensive Vergasung der Abfallstoffe auch der Bedarf an Zusatzbrennstoff auf niedrigem Niveau gehalten werden kann.

Der Bereich des Schlackeschaums auf dem Schlackebad weist üblicherweise eine Höhe von mindestens 30 cm auf und es ist durchaus möglich, daß sich die ganze Schlacke im Zustand der Schaumschlacke befindet, so daß die Schlacke keinen definierten Flüssigkeitsspiegel mehr bildet. Die Unterbaddüsen münden stets direkt im Schlackebereich, und sie können von unten oder auch von der Seite in die Schlacke gerichtet sein. Vorzugsweise liegen die Mündungen der Unterbaddüsen mindestens 30 cm unter der oberen Grenze der Schaumschlacke.

Es ist zweckmäßig, die Abfallstoffe zu Formkörpern gepreßt in den Reaktor einzubringen, wobei die Formkörper z.B. Kantenlängen von 10 bis 40 cm aufweisen. Solche, aus zerkleinerten Abfallstoffen gebildete Agglomerate heizen sich im Schlackeschaum rasch auf und verringern den Staubgehalt im Abgas. Es kann sich empfehlen, die Abfallstoffe oder die daraus geformten Formkörper oder Agglomerate zu trocknen, bevor man sie in den Reaktor einträgt.

Im allgemeinen besteht die Schlacke zu mindestens 50 Gew.-% und zumeist zu mindestens 70 Gew.-% aus unverbrennlichen Bestandteilen der dem Reaktor zugeführten Abfallstoffe. Es kann zweckmäßig sein, zusammen mit den Abfallstoffen auch Flußmittel, z.B. Kalkstein oder Dolomit, in den Schlackebereich zu geben. Zusatzbrennstoff kann gasförmig, flüssig oder fest (z.B. Pulverkohle) dem Schlackebereich zugeführt werden, um die Temperatur im Schlackebereich ausreichend hoch zu halten. Das Verfahren ist für unterschiedliche Arten von Abfällen geeignet, z.B. für kommunalen oder Industriemüll, industrielle feste oder schlammförmige Abfallstoffe, Klärschlämme oder Restmüll, der nach Aussondern etwa von Metall- und Glasteilen übrigbleibt.

Es ist zweckmäßig, noch innerhalb des Reaktors im Bereich der Nachverbrennung oberhalb der Zufuhr des dritten sauerstoffhaltigen Gases eine oder mehrere Kühleinrichtungen vorzusehen. Diese Kühleinrichtungen werden vorzugsweise mit Wasser gespeist und erzeugen Wasserdampf.

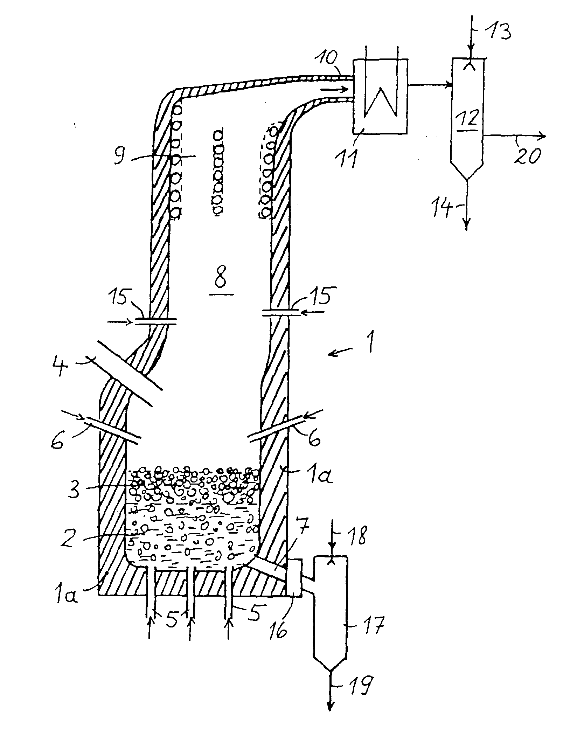

Ausgestaltungsmöglichkeiten des Verfahrens werden mit Hilfe der Zeichnung erläutert. Die Zeichnung zeigt in schematischer Darstellung einen Längsschnitt durch einen Reaktor mit Schlackebad und Schaumschlacke.

Der Reaktor (1), mit einer feuerfesten Auskleidung (1a) versehen, weist im unteren Bereich ein Schlackebad (2) auf, das nach oben immer mehr in Schlackeschaum (3) übergeht. Im allgemeinen gibt es keine genau definierte Grenze zwischen Schlackebad und Schaumschlacke. Oberhalb des Schlackeschaumbereichs (3) befindet sich die Zufuhrleitung (4) für die zu vergasenden Abfallstoffe, wobei man die Abfallstoffe bevorzugt als Agglomerate, z.B. gepreßte Formkörper, dem Reaktor aufgibt. Ein erstes sauerstoffhaltiges Gas führt man dem unteren Bereich des Reaktors durch Unterbaddüsen (5) zu und ein zweites sauerstoffhaltiges Gas wird durch Überbaddüsen (6) dem Schlackeschaumbereich (3) zugeführt. Das erste und zweite sauerstoffhaltige Gas, das vorzugsweise vorgewärmt ist, hat üblicherweise einen O₂-Gehalt von 60 bis 100 Vol.-%. Einzelne Unterbaddüsen können auch seitlich in das Schlackebad (2) gerichtet sein, was in der Zeichnung nicht berücksichtigt ist.

Falls Zusatzbrennstoff erforderlich ist, kann dieser gasförmig durch die Düsen (5) oder (6) und fest oder flüssig durch die Leitung (4) in den Schlackebereich des Reaktors (1) geleitet werden. 10 bis 50 % der insgesamt durch die Düsen (5) und (6) eingeleiteten O₂-Menge führt man durch die Düsen (5) direkt in das Schlackebad (2). Vorzugsweise liegt dieser O₂-Anteil, der durch die Düsen (5) eingeleitet wird, bei mindestens 20 %.

Durch das Gas der Unterbaddüsen (5) erzeugt man den Schlackeschaum (3), dessen Höhe mindestens 30 cm beträgt. Der Schaum (3) hüllt die von oben zugeführten Abfallstoffe sofort ein und bewirkt die rasche Aufheizung der Abfälle oder Abfallstoff-Agglomerate. Dabei entstehen brennbare Gase und Dämpfe, die teilweise sofort oberhalb des Schlackeschaums durch den aus den Düsen (6) kommenden Sauerstoff partiell verbrannt werden. Die partielle Verbrennung unter der Wirkung der Überbaddüsen (6) trägt dazu bei, daß Schadstoffe, z.B. Dioxine und Furane, weitgehend zerstört werden und die Temperatur im Bereich des Schlackebades hoch bleibt.

Die aus dem Schlackebereich aufwärts abziehenden Gase und Dämpfe gelangen in einen Nachverbrennungsraum (8), dem man durch die Düsen (15) ein drittes sauerstoffhaltiges Gas, insbesondere Luft, zuführt. Hierbei wird das Abgas weiter erhitzt, gleichzeitig zerstört man restliche Schadstoffe praktisch vollständig. Oberhalb des Nachverbrennungsraums (8) befindet sich ein Kühlbereich (9), der mit an sich bekannten Kühleinrichtungen versehen ist. Hierbei wird unter Zufuhr von Speisewasser Wasserdampf erzeugt. An den Reaktorausgang (10) schließt sich ein Abhitzekessel (11) an, dem ein Waschkühler (12) folgt, in welchem das Abgas mit Wasser aus der Leitung (13) besprüht wird. Feststoffhaltiges Abwasser zieht man in der Leitung (14) ab und gekühltes, mit Wasserdampf gesättigtes Abgas wird in der Leitung (20) abgezogen und nicht dargestellten, an sich bekannten Kühl- und Reinigungseinrichtungen zugeführt.

Die Schlacke kann kontinuierlich oder diskontinuierlich aus dem Reaktor (1) abgezogen werden. In der Zeichnung ist ein Kanal (7) vorgesehen, durch welchen die Schlacke bei geöffnetem Verschluß (16) zunächst in eine Auffangkammer (17) fließt, in welcher sie mit Wasser aus der Leitung (18) gekühlt und granuliert wird. Das Schlackegranulat wird durch die Leitung (19) abgezogen und einer nicht dargestellten Sammeleinrichtung zugeführt.

### Beispiel

Einem der Zeichnung entsprechenden Reaktor mit einer Höhe des Schlackebereichs von 1,1 m und einem Volumen der teilweise geschäumten Schlacke von 2,5 m³ werden würfelförmige Müllpreßlinge mit einer Kantenlänge von 300 mm zugeführt. Der Müll besteht zu 56 Gew.-% aus brennbaren Bestandteilen, 20 Gew.-% Asche und 24 Gew.-% Feuchte, er hat einen Heizwert von 11900 kJ/kg. Dem Reaktor werden 3,4 t/h Müllpreßlinge und als Flußmittel 70 kg/h CaO aufgegeben. Pro Stunde werden 750 kg Schlacke erzeugt, die kontinuierlich aus dem Reaktor abgeleitet werden. Durch die Düsen (5) und (6) leitet man technisch reinen Sauerstoff ein, und zwar durch die Unterbaddüsen (5) in einer Menge von 240 Nm³/h und durch die Überbaddüsen (6) 650 Nm³/h. Zur Nachverbrennung im Raum (8) führt man 7200 Nm³/h Luft durch die Düsen (15) zu. Im Kühlbereich (9) erfolgt die Wärmeabfuhr über 25 m² Kühlfläche, wobei aus dem Speisewasser 5,6 t/h Sattdampf von 40 bar erzeugt werden. Mit einer Temperatur von 1500°C tritt das Abgas in den Abhitzekessel (11) ein. Das Abgas besteht hauptsächlich aus:

| | |
|---|---|
| H₂O | 24 Vol.-% |
| CO₂ | 20 Vol.-% |
| N₂ | 55 Vol.-% |
| O₂ | 1 Vol.-%. |

## Patentansprüche

1. Verfahren zur thermischen Entsorgung von Abfallstoffen in einem Reaktor mit einem Schlackebad, das Temperaturen im Bereich von 1200 bis 1600°C aufweist und das mindestens teilweise aus der bei der Oxidation der Abfallstoffe gebildeten Schlacke besteht, dadurch gekennzeichnet, daß man zum Aufrechterhalten der Temperatur im Bereich des Schlackebades ein erstes sauerstoffhaltiges Gas durch im Schlackebad mündende Düsen (Unterbaddüsen) und ein zweites sauerstoffhaltiges Gas von oben durch auf die Schlacke gerichtete Düsen (Überbaddüsen) einleitet, wobei man 10 bis 50 % des gesamten O₂-Gehalts des ersten und zweiten sauerstoffhaltigen Gases durch die Unterbaddüsen in das Schlackebad leitet und Schlackeschaum erzeugt, daß man die Abfallstoffe von außen mindestens teilweise in den Schlackeschaum einbringt, daß man die gesamte durch die Unterbaddüsen und die Überbaddüsen eingeleitete Sauerstoffmenge so bemißt, daß sie 60 bis 90 % der zur vollständigen Oxidation der dem Reaktor zugeführten brennbaren Bestandteile nötigen Sauerstoffmenge entspricht, und daß man unter Zugabe eines dritten sauerstoffhaltigen Gases die aus dem Bereich des Schlackebades aufsteigenden Gase und Dämpfe oberhalb der Überbaddüsen im Reaktor nachverbrennt.

2. Verfahren nach Anspruch 1, dadurch gekennzeichnet, daß der Schlackeschaum eine Höhe von mindestens 30 cm aufweist.

3. Verfahren nach Anspruch 1 oder einem der folgenden, dadurch gekennzeichnet, daß man die Abfallstoffe als Formkörper in den Reaktor einbringt.

4. Verfahren nach Anspruch 1 oder 3, dadurch gekennzeichnet, daß man die Abfallstoffe oder die Formkörper vor dem Einbringen in den Reaktor trocknet.

5. Verfahren nach Anspruch 1 oder einem der folgenden, dadurch gekennzeichnet, daß die Schlacke zu mindestens 50 Gew.-% aus unverbrennlichen Bestandteilen der dem Reaktor zugeführten Abfallstoffe besteht.

6. Verfahren nach Anspruch 1 oder einem der folgenden, dadurch gekennzeichnet, daß man Zusatzbrennstoff in den Schlackebereich einleitet.

7. Verfahren nach Anspruch 1 oder einem der folgenden, dadurch gekennzeichnet, daß man das nachverbrannte Abgas im Reaktor kühlt.

## Claims

1. A method for the thermal disposal of waste substances in a reactor with a slag bath, which is at temperatures in the range from 1200 to 1600°C and which consists at least partially of the slag formed upon the oxidation of the waste substances, characterised in that in order to maintain the temperature in the region of the slag bath a first oxygen-containing gas is introduced through nozzles (under-bath nozzles) which open into the slag bath and a second oxygen-containing gas is introduced from above through nozzles (over-bath nozzles) directed on to the slag, 10 to 50% of the total O₂ content of the first and second oxygen-containing gases being passed through the under-bath nozzles into the slag bath and slag froth being produced, that the waste substances are introduced from the outside at least partially into the slag froth, that the total quantity of oxygen introduced through the under-bath nozzles and the over-bath nozzles is calculated such that it corresponds to 60 to 90% of the quantity of oxygen required for complete oxidation of the combustible components supplied to the reactor, and that, with the addition of a third oxygen-containing gas the gases and vapours rising from the region of the slag bath are after-burned in the reactor above the over-bath nozzles.

2. A method according to Claim 1, characterised in that the slag froth has a height of at least 30 cm.

3. A method according to Claim 1 or one of the following claims, characterised in that the waste substances are introduced into the reactor as shaped bodies.

4. A method according to Claim 1 or 3, characterised in that the waste substances or the shaped bodies are dried before introduction into the reactor.

5. A method according to Claim 1 or one of the following claims, characterised in that the slag consists of at least 50% by weight of non-combustible constituents of the waste substances fed to the reactor.

6. A method according to Claim 1 or one of the following claims, characterised in that additional fuel is introduced into the slag region.

7. A method according to Claim 1 or one of the following claims, characterised in that the after-burned exhaust gas is cooled in the reactor.

## Revendications

1. Procédé d'élimination thermique de déchets dans un réacteur à bain de scorie qui a une température de l'ordre de 1200 à 1600°C et qui est constitué au moins en partie de la scorie formée lors de l'oxydation des déchets, caractérisé en ce qu'il consiste à envoyer, pour maintenir la température dans la zone du bain de scorie, un premier gaz renfermant de l'oxygène par des buses (buses inférieures du bain) débouchant dans le bain de scorie et un deuxième gaz renfermant de l'oxygène par le haut par des buses (buses supérieures du bain) dirigées sur la scorie, en envoyant de 10 à 50% de la teneur totale en O₂ du premier et du deuxième gaz renfermant de l'oxygène dans le bain de scorie par les buses inférieures du bain et en produisant de la mousse de scorie, à introduire les déchets de l'extérieur au moins partiellement dans la mousse de scorie, à faire en sorte que la quantité d'oxygène envoyée en tout par les buses inférieures de bain et par les buses supérieures de bain représente de 60 à 90% de la quantité d'oxygène nécessaire pour l'oxydation complète des constituants combustibles envoyés au réacteur et à faire subir par addition d'un troisième gaz renfermant de l'oxygène une post-combustion dans le réacteur au-dessus des buses supérieures de bain aux gaz et aux vapeurs ascendants dans la région du bain de scorie.

2. Procédé suivant la revendication 1, caractérisé en ce que la mousse de scorie a une hauteur d'au moins 30 cm.

3. Procédé suivant la revendication 1 ou l'une des suivantes, caractérisé en ce qu'il consiste à introduire les déchets sous forme de corps moulés dans le réacteur.

4. Procédé suivant la revendication 1 ou 3, caractérisé en ce qu'il consiste à sécher les déchets ou les corps moulés avant de les introduire dans le réacteur.

5. Procédé suivant la revendication 1 ou l'une des suivantes, caractérisé en ce que la scorie est constituée pour au moins 50% en poids de constituants non-combustibles des déchets envoyés au réacteur.

6. Procédé suivant la revendication 1 ou l'une des suivantes, caractérisé en ce qu'il consiste à envoyer du combustible supplémentaire dans la zone de la scorie.

7. Procédé suivant la revendication 1 ou l'une des suivantes, caractérisé en ce qu'il consiste à refroidir dans le réacteur l'effluent gazeux ayant subi une post-combustion.
